# EUROPEAN PATENT SPECIFICATION

(11) **EP 3 923 057 B1**
(45) Date of publication and mention of the grant of the patent: **27.11.2024**
(21) Application number: 20751944.8
(22) Date of filing: 06.02.2020
(51) Int. Cl.: G02B 26/12, B23K 26/082

(54) **POLYGON MIRROR, LIGHT GUIDE DEVICE, AND OPTICAL SCANNING DEVICE**
POLYGONSPIEGEL, LICHTLEITERVORRICHTUNG UND OPTISCHE ABTASTVORRICHTUNG
MIROIR POLYGONAL, DISPOSITIF DE GUIDAGE DE LUMIÈRE ET DISPOSITIF DE BALAYAGE OPTIQUE

(30) Priority: 07.02.2019 JP 2019020877
(43) Date of publication of application: 15.12.2021
(73) Proprietor: Kawasaki Jukogyo Kabushiki Kaisha, Hyogo 650-8670 (JP)
(72) Inventor: NAKAZAWA, Mutsuhiro, Kobe 6508670 (JP); OOGUSHI, Osami, Kobe 6508670 (JP)
(74) Representative: Wenzel Nemetzade Warthmüller Patentanwälte Part mbB
(86) International application number: PCT/JP2020/004629
(87) International publication number: WO 2020/162557

(56) References cited:
- EP-A2- 0 394 072
- WO-A1-2017/135225
- CN-A- 1 415 994
- JP-A- 2017 138 298
- JP-A- H0 495 915
- JP-A- H03 130 715
- JP-A- H04 367 815
- JP-A- H04 367 815
- US-A1- 2017 184 705

## Description

### TECHNICAL FIELD

The present invention relates mainly to a polygon mirror that deflects light for optical scanning.

### BACKGROUND ART

Conventionally, a technique of guiding light from a light source by a polygon mirror or the like to scan along a straight scanning line has been widely used in image forming device, laser processing device, and the like. PTL 1 discloses an optical scanning device equipped with a polygon mirror.

The optical scanning device of PTL 1 includes a light projection means and a light reflection means. The light projection means has a polygon mirror. Light incident in a predetermined direction is reflected by a reflection surface of each side of a regular polygon of the polygon mirror which rotates. Accordingly, the polygon mirror emits the light while the polygon mirror rotates. The light reflection means reflects the light emitted from the light projection means by a plurality of reflective sections. The light reflection means leads the light to an arbitrary irradiated point on a predetermined scanning line. EP 0 394 072 A2 discloses a rotary reflecting device according to the state of the art.

### PRIOR-ART DOCUMENTS

### PATENT DOCUMENTS

PTL 1: Japanese Patent No. 5401629

### SUMMARY OF THE INVENTION

### PROBLEMS TO BE SOLVED BY THE INVENTION

In the configuration of PTL 1 above, the entire scanning line is composed of the light deflection range corresponding to one side of the polygon mirror. Therefore, if a long scanning line is needed to be realized, it was difficult to increase the number of sides because it is necessary to secure the light deflection angular range to some extent. In the case where the polygon of the polygon mirror has a small number of sides, the distortion of scanning may increase when light is reflected near the vertex of the polygon, and improvement is needed.

The present invention is made in consideration of the above circumstances, and its object is to provide a polygon mirror capable of switching a scanning range at a high speed and of scanning with low distortion.

### MEANS FOR SOLVING THE PROBLEMS

The problem to be solved by the present invention is as described above, and the means to solve the problem and the effect thereof are described below.

A polygon mirror according to a first aspect of the claimed invention is defined in appended claim 1.

As a result, the position at which the light is reflected by the emitting surface (emission position) is discontinuously switched in the direction of the rotational axis as the polygon mirror rotates. Therefore, by guiding the emission light to different scanning areas according to the emission position in the direction of the rotational axis, scanning of a plurality of areas can be performed while switching the scanning areas at a high speed. Conversely, a configuration in which a large number of areas are scanned can be easily realized by increasing the number of sides of the polygon mirror. Therefore, since the sides of the polygon mirror can be shortened, the distortion of scanning at both ends of each scanning area can be reduced.

In a second aspect of the present invention, a light guide device having the following configuration is provided. That is, the light guide device includes the polygon mirror described above, a first light reflection unit, and a second light reflection unit. The first light reflection unit guides light deflected by one of the plurality of the sides of the polygon mirror to a first scanning area. The second light reflection unit guides light deflected at the other side to a second scanning area different from the first scanning area.

This allows for flexible scanning of various locations by guiding the light to a plurality of scanning areas. Since the scanning distortion in each scanning area is reduced, high quality scanning can be performed as a whole.

In a third aspect of the present invention, an optical scanning device having the following configuration is provided. That is, the optical scanning device includes the light guide device described above. Each of the first light reflection unit and the second light reflection unit includes a plurality of reflection surfaces that reflect the light. Each of the first light reflection unit and the second light reflection unit reflects the light emitted from the rotating polygon mirror two or more times, and guides the light to an arbitrary irradiated point included in a scanning line that is straight. A light path length from an incident position of the light to the polygon mirror to the irradiated point is substantially constant over all the irradiated points in the scanning line. On the scanning line, the scanning speed of the light guided from the polygon mirror by the light reflection unit is substantially constant.

As a result, by scanning while switching a plurality of scanning areas, a long-distance straight scanning can be realized as a whole. By the way, when the rotation phase of the polygon mirror is a rotation phase in which the irradiation range of the incident light hangs on the portion corresponding to the vertex of the polygon, the light intensity of the reflection light is not stable and cannot be used for optical scanning in effect. In addition, in the case of the configuration in which the deflection angular range of the emission light corresponding to one side of the polygon mirror is divided and led to different scanning areas, when the rotation phase of the angle of the emission light falls on the boundary of the division, it cannot be used for optical scanning in the same way. In this respect, in the above configuration, the rotation phase of the polygon mirror in which the incident light is irradiated to the vertex of the polygon mirror and the rotation phase of the polygon mirror corresponding to the switching of the scanning area can be made common. Therefore, since the range of the rotation phase of the polygon mirror that cannot be used for optical scanning is less likely to increase, scanning with less distortion can be realized while using the light efficiently for scanning.

### EFFECTS OF THE INVENTION

According to the present invention, it is possible to provide a polygon mirror capable of switching the scanning range at a high speed and of scanning with low distortion.

### BRIEF DESCRIPTION OF THE DRAWINGS

FIG. 1 is a diagonal view showing schematically a configuration of a laser processing device according to one embodiment of the present invention.
FIG. 2 is a schematic diagram showing a light path of a laser beam emitted from a laser oscillator until it is irradiated onto a workpiece.
FIG. 3 is a diagonal view of a polygon mirror.
FIG. 4 is a diagonal view showing the switching of an emission position from which the laser beam is emitted from the polygon mirror as the polygon mirror rotates.
FIG. 5 is an exploded diagonal view of the polygon mirror.
FIG. 6 is a conceptual diagram showing the transformation of a position of a virtual arc, which is a trajectory in which a focal point moves due to deflection of the laser beam by rotation of polygon mirror, by a second light guide unit.
FIG. 7 is a diagonal view showing a polygon mirror and a second light guide unit.
FIG. 8 is a schematic diagram showing that the laser beam is irradiated to different irradiation zones by switching the emission position from which the laser beam is emitted from the polygon mirror.
FIG. 9 is a simplified diagram showing the light path of a laser beam reflected by a polygon mirror and irradiated to a workpiece.
FIG. 10 is a diagonal view of a polygon mirror of a first modification, not according to the claimed invention.
FIG. 11 is a diagonal view of a polygon mirror of a second modification.
FIG. 12 is a schematic diagram of a second light guide unit corresponding to the polygon mirror of the second modification.
FIG. 13 is a schematic diagram showing a third modification in which the second light guide unit is modified.

### EMBODIMENT FOR CARRYING OUT THE INVENTION

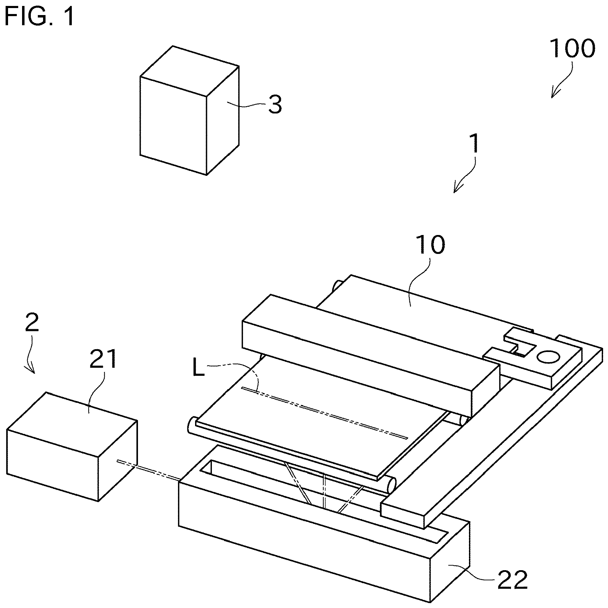

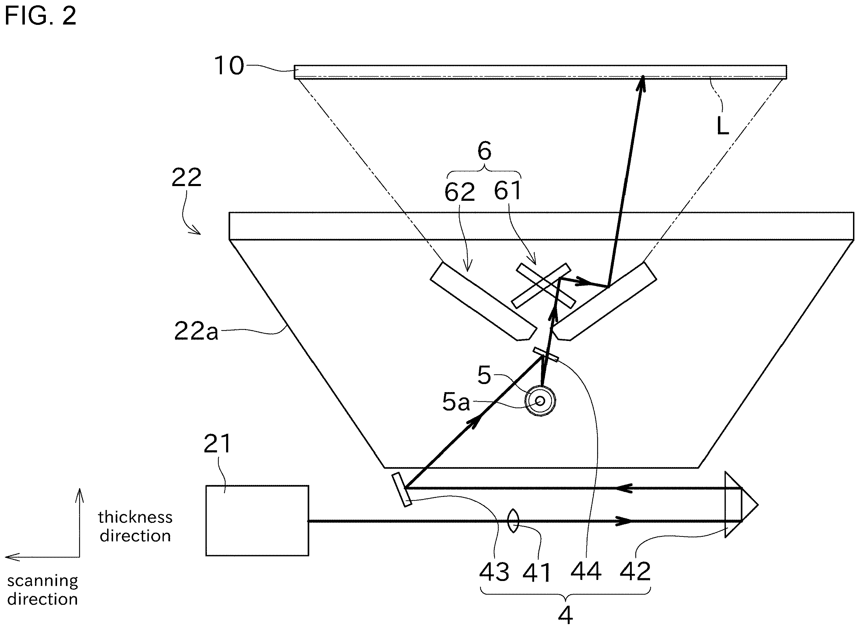

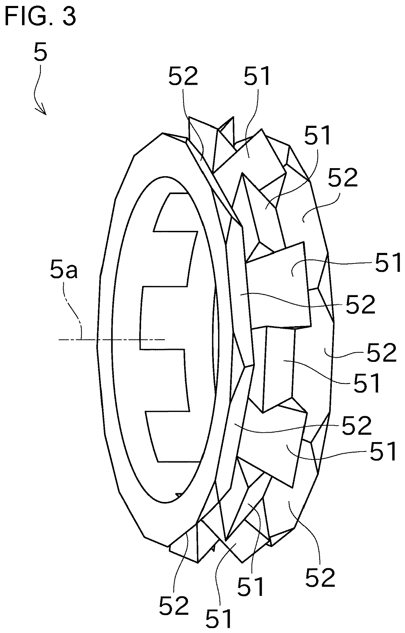

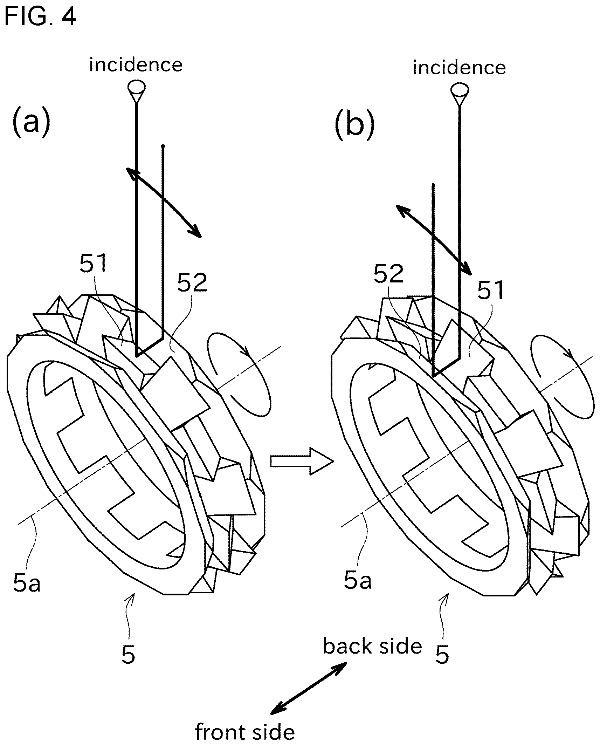

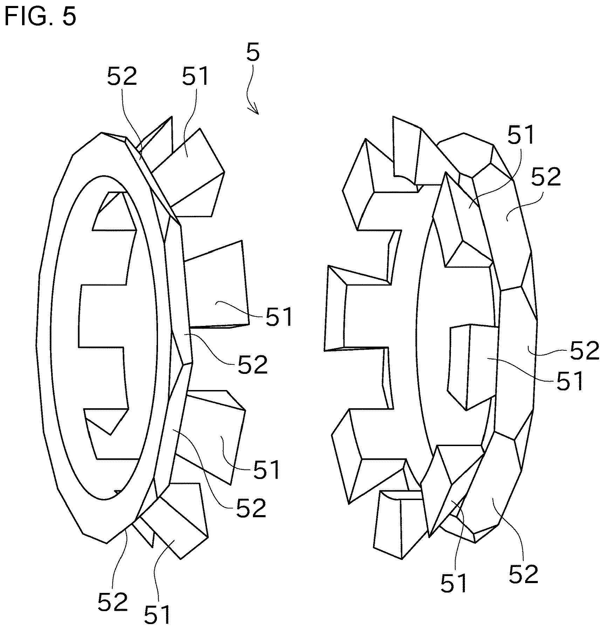

Next, an embodiment of the present invention will be described with reference to the drawings. FIG. 1 is a diagonal view showing schematically a configuration of a laser processing device 100 according to an embodiment of the present invention. FIG. 2 is a schematic diagram showing a light path of a laser beam emitted from a laser oscillator 21 until it is irradiated onto a workpiece 10. FIG. 3 is a diagonal view of a polygon mirror 5. FIG. 4 is a diagonal view showing the switching of an emission position from which the laser beam is emitted from the polygon mirror 5 as the polygon mirror 5 rotates. FIG. 5 is an exploded diagonal view of the polygon mirror 5.

The laser processing device (optical scanning device) 100 shown in FIG. 1 can process a plate-like workpiece 10 by the laser beam by scanning with the laser beam. The processing work may vary and may be, for example, cutting processing of the workpiece 10 and patterning processing to remove a thin film deposited on the surface of the workpiece 10, which is a substrate.

The laser processing device 100 of this embodiment performs the above-mentioned processing work by scanning the generated laser beam (light) on the workpiece 10. Scanning refers to changing the irradiation position of the laser beam or other light in a predetermined direction.

The laser processing device 100 mainly includes a workpiece conveyance device 1, a laser unit 2, and a control unit 3.

The workpiece conveyance device 1 moves a workpiece 10 in a horizontal posture at a constant speed in a predetermined direction. The horizontal posture is the posture in which the thickness direction of the workpiece 10 is the vertical direction, as shown in FIG. 1.

The laser unit 2 generates the laser beam and scans the workpiece 10 with the laser beam. The detailed configuration of the laser unit 2 will be described later.

The control unit 3 controls the operation of the workpiece conveyance device 1 and the laser oscillator 21. The control unit 3 is realized by a computer including, for example, a CPU, a ROM, a RAM, a timer, and the like.

Next, the laser unit 2 will be described in detail. The laser unit 2 includes a laser oscillator 21 and a light guide device 22.

The laser oscillator 21 functions as a light source of the laser beam. The laser oscillator 21 generates a pulsed laser with a short time width by pulse oscillation. The time width of the pulsed laser is not particularly limited. The time width may be a short time interval, such as a nanosecond order, a picosecond order, or a femtosecond order, for example. The laser oscillator 21 may generate a CW (Continuous Wave) laser by continuous wave oscillation. The laser oscillator 21 emits the laser beam to the light guide device 22.

The light guide device 22 guides the laser beam generated by the laser oscillator 21 to the workpiece 10. The light guide device 22 includes, for example, optical components such as lenses, prisms, and the like.

As shown in FIG. 2, the light guide device 22 of the present embodiment has a first light guide unit 4, a polygon mirror 5, and a second light guide unit (light guide part) 6. At least some of these optical components are disposed inside the housing 22a of the light guide device 22.

The first light guide unit 4 includes an optical component that guides the laser beam generated by the laser oscillator 21 to the polygon mirror 5. The first light guide unit 4 has, in order from the laser oscillator 21 side along the light path of the laser beam, an introduction lens 41, an introduction prism 42, a first introduction mirror 43, and a second introduction mirror 44.

The introduction lens 41 is used to converge a laser beam generated by the laser oscillator 21 at a focal point. The laser beam passed through the introduction lens 41 is guided to the polygon mirror 5 by the introduction prism 42, the first introduction mirror 43, and the second introduction mirror 44.

The introduction prism 42, the first introduction mirror 43, and the second introduction mirror 44 constitute an optical unit. The optical unit folds the optical path at an upstream side of the light path than the polygon mirror 5. Accordingly, the light path length required to position the focal point on the surface of the workpiece 10 can be secured. The optical components included by the above-described first light guide unit 4 may be omitted as appropriate, and other prisms or mirrors may be added as appropriate between the introduction lens 41 and the polygon mirror 5. Also, the position of the introduction lens 41 can be in front of the polygon mirror 5 (upstream of the light path from the polygon mirror 5). That is, some or all of the introduction prism 42, the first introduction mirror 43, and the second introduction mirror 44 may be positioned upstream from the introduction lens 41.

The polygon mirror 5 is rotatably provided around a rotational axis 5a passing through the center thereof. When the polygon mirror 5 is viewed along the rotational axis 5a, the polygon mirror 5 has a regular polygonal shape. In the present embodiment, the polygon of the polygon mirror 5 is a hexagon having 16 numbers of sides. However, the number of sides of the polygon mirror 5 is arbitrary.

The polygon mirror 5 includes a plurality of first reflection surfaces 51 and a plurality of second reflection surfaces 52, as shown in FIG. 3. Specifically, one first reflection surface 51 and one second reflection surface 52 are formed for each side of the polygon mirror 5 formed in a polygonal shape. The first reflection surface 51 and the second reflection surface 52 are arranged to correspond to each other.

Each of the first reflection surface 51 and the second reflection surface 52 are formed in a planar shape. The first reflection surfaces 51 are lined up around the rotational axis 5a. The second reflection surfaces 52 are lined up around the rotational axis 5a.

The plurality of first reflection surfaces 51 are all placed at an angle to a virtual plane perpendicular to the rotational axis 5a. On any two adjacent sides in the circumferential direction among the sides that the polygon of the polygon mirror 5 includes, each of the first reflection surfaces 51 is inclined with respect to the virtual plane perpendicular to the rotational axis 5a in opposite directions and at an angle equal to each other (specifically, 45°). The position at which the first reflection surface 51 is provided does not change in the direction of the rotational axis 5a at any of the sides that the polygon mirror 5 polygon includes.

The plurality of second reflection surfaces 52 are all placed at an angle to a virtual plane perpendicular to the rotational axis 5a. On any two adjacent sides in the circumferential direction among the sides that the polygon of the polygon mirror 5 includes, each of the second reflection surfaces 52 is inclined with respect to the virtual plane perpendicular to the rotational axis 5a in opposite directions and at an angle equal to each other (specifically, 45°). On any two adjacent sides in the circumferential direction, the positions at which the second reflection surfaces 52 are provided are different from each other in the direction of the rotational axis 5a.

The position and the direction of inclination of the second reflection surface 52 correspond to the direction of inclination of the first reflection surface 51 corresponding to the second reflection surface 52 in the relevant side. Accordingly, on any polygonal side of the polygon mirror 5, the second reflection surface 52 and the first reflection surface 51 are arranged to form a V-shape.

The laser beam (incident light) introduced by the second introduction mirror 44 is irradiated to the polygon mirror 5 in a direction perpendicular to the rotational axis 5a and toward the center of the polygon mirror 5. The position at which the laser beam is irradiated is the portion of the outer circumferential surface of the polygon mirror 5 where the first reflection surface 51 is lined up in the circumferential direction.

For example, referring to FIG. 4(a), the laser beam incident on the polygon mirror 5 is reflected by hitting the first reflection surface 51, and then further reflected by hitting the second reflection surface 52, and then emitted from the polygon mirror 5. When the polygon mirror 5 rotates with the light hitting a certain side of the polygon mirror 5, the directions of the first reflection surface 51 and the second reflection surface 52 change continuously. Accordingly, the direction of the light emitted from the second reflection surface 52 changes smoothly in the direction shown by the bold arrow. Thus, a deflection of the emission light is realized.

Both the first reflection surface 51 and the second reflection surface 52 have an inclination angle of 45° with respect to a virtual plane perpendicular to the rotational axis 5a. Therefore, the emission light from the polygon mirror 5 is deflected in the virtual plane perpendicular to the rotational axis 5a. The direction of the inclination of the first reflection surface 51 and the second reflection surface 52 and the position of the second reflection surface 52 are switched for each polygonal side of the polygon mirror 5. Accordingly, as shown in FIGS. 4(a) and 4(b), the emission position of the emission light from the polygon mirror 5 (in other words, the plane including the deflection angular range of the emission light) is switched discontinuously in the direction of the rotational axis 5a according to which side of the polygonal side of the polygon mirror 5 the laser beam hits. In the state of FIG. 4(a), the emission position is on one side (the back side in FIG. 4) in the direction of the rotational axis 5a than the incident position. In the state of FIG. 4(b), the emission position is on the opposite side (the front side in FIG. 4) in the direction of the rotational axis 5a than the incident position. In any of the states, the emission light is deflected in a virtual plane perpendicular to the rotational axis 5a.

As shown in FIG. 5, the polygon mirror 5 of this embodiment is made of a combination of two divided parts in the direction of the rotational axis 5a. Each of the divided parts has the same shape as each other. In each of the divided parts, a first reflection surface 51 and a second reflection surface 52 corresponding to each other are arranged every other one of the polygonal sides of the polygon mirror 5. This facilitates manufacturing. However, there is no limitation on how the polygon mirror 5 is manufactured. For example, the polygon mirror 5 may be made of a single member.

The second light guide unit 6 shown in FIG. 2 reflects the laser beam emitted from the polygon mirror 5 as appropriate and guides it to the surface of the workpiece 10. In the following, the point at which the laser beam is irradiated on the workpiece 10 may be referred to as the irradiated point.

The second light guide unit 6 is configured to reflect the laser beam a plurality of times and guide it to the surface of the workpiece 10. As shown in FIG. 2, the second light guide unit 6 includes a first light guide unit 61 having a plurality of reflection mirrors and a second light guide unit 62 having a plurality of light guiding members.

The first light guide unit 61 and the second light guide unit 62 are arranged so that the light path length to the surface of the workpiece 10 is kept at a substantially constant regardless of the emission position and deflection angle of the laser beam from the polygon mirror 5. Therefore, regardless of the rotation phase of the polygon mirror 5, the focal point of the laser beam can be maintained substantially located near the surface of the workpiece 10.

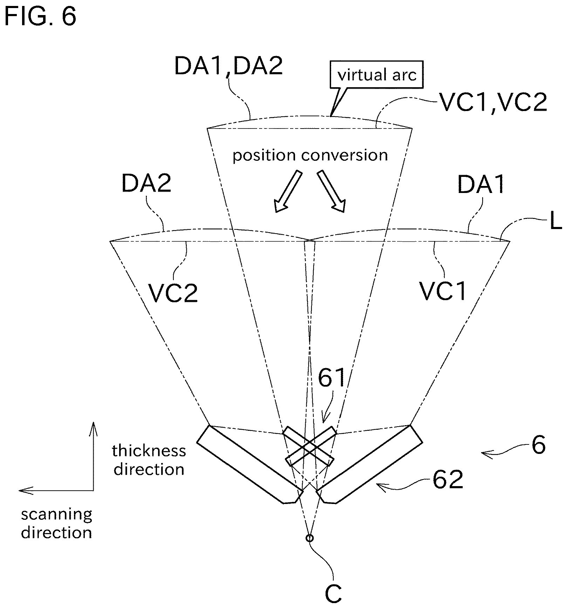

The function of the second light guide unit 6 will be described in detail below. FIG. 6 is a conceptual diagram showing the transformation of the position of a virtual arc, which is a trajectory in which the focal point moves due to deflection of the laser beam by rotation of the polygon mirror 5, by the second light guide unit 6.

Assuming that the second light guide unit 6 is not provided, the focal point of the laser beam emitted from the polygon mirror 5 (a point at a certain distance from the laser oscillator 21) draws an arc-shaped trajectory as the rotation angle of the polygon mirror 5 changes by an angle corresponding to one side, as shown by the dot-dash line illustrated on the upper side of FIG. 6. The center of this trajectory is the deflection center C at which the laser beam is deflected by the polygon mirror 5. The radius of the trajectory corresponds to the light path length from the deflection center C to the focal point.

As described above, depending on which polygonal side of the polygon mirror 5 the laser beam hits, the emission position of the laser beam from the polygon mirror 5 is switched in two steps in the direction of the rotational axis 5a. Therefore, although the arc-shaped trajectory in the upper side of FIG. 4 appears to be one, in fact, two trajectories (virtual arcs DA1, DA2) overlap.

The second light guide unit 6 transforms the respective positions of the two virtual arcs DA1, DA2 to be aligned generally in the scanning direction on the workpiece 10 by folding the light path from the deflection center C to the focal point. That is, the positions of the virtual arcs DA1, DA2 are converted by the second light guide unit 6 so that the directions of the corresponding virtual chords VC1 and VC2 are approximately aligned with the scanning line L. As a result, the aggregate of the two virtual arcs DA1, DA2 whose positions have been converted extends in a substantially straight line as a whole so as to cover the length of the scanning line L.

In this manner, the first light guide unit 61 and the second light guide unit 62 reflect the light multiple times so that the chords VC1 and VC2 of the two virtual arcs DA1, DA2 are in the same direction as the scanning direction (so that they line up in the scanning direction). The two virtual arcs DA1, DA2 are generated by the two-step switching of the emission position at which the laser beam is emitted from the polygon mirror 5.

In order to transform the plurality of virtual arcs DA1, DA2 into different positions, it is necessary to reflect the light in different directions according to the virtual arcs DA1, DA2. In this regard, as described above, the position at which the laser beam is emitted from the polygon mirror 5 is different in the direction of the rotational axis 5a for each of the two virtual arcs DA1, DA2. Therefore, a configuration in which the light is reflected in a different direction for each arc can be realized while easily avoiding mechanical interference of the reflection mirror and the light guide members, etc.

With the second light guide unit 6, two points at both ends of the virtual arcs DA1, DA2 are relocated on the scanning line L, and the virtual arcs DA1, DA2 (i.e., the curve connecting the two points) are relocated downstream in the optical axis direction from the scanning line L. With the rotation of the polygon mirror 5, the focal point of the laser beam moves along the arcs DA1, DA2 whose positions have been thus converted.

If the central angle of the arc is not large, the virtual arcs DA1, DA2 approximate the corresponding virtual chords VC1, VC2. Therefore, the movement of the focal point along the virtual arcs DA1, DA2 due to the rotation of the polygon mirror 5 can be considered to be substantially equal to the constant velocity linear motion along the scanning line L.

As described above, the focal point of the laser beam can be scanned along a substantially straight line and at a constant velocity near the surface of the workpiece 10.

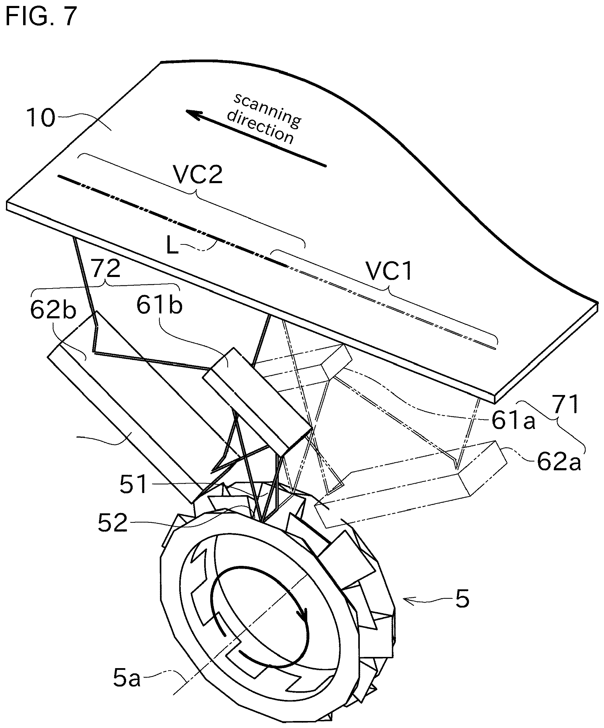

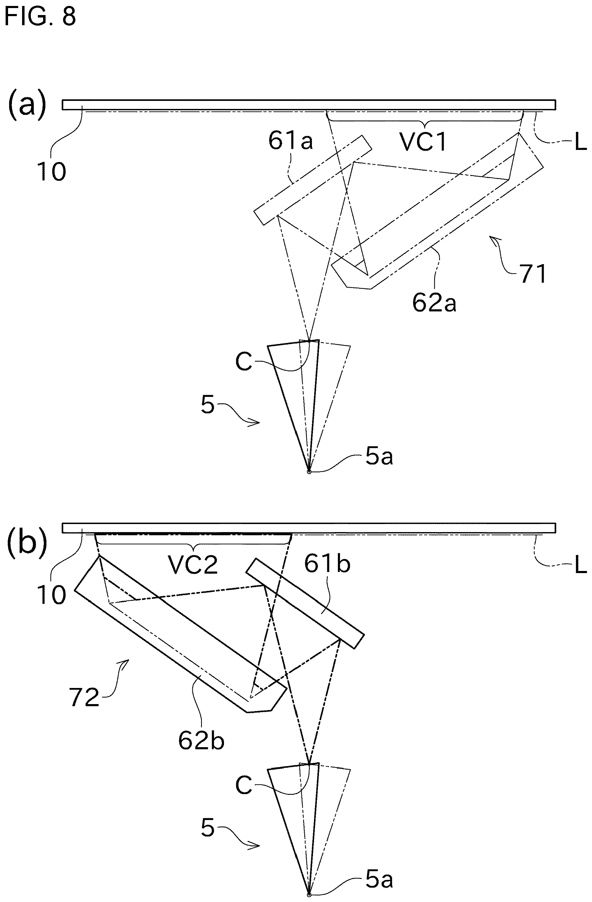

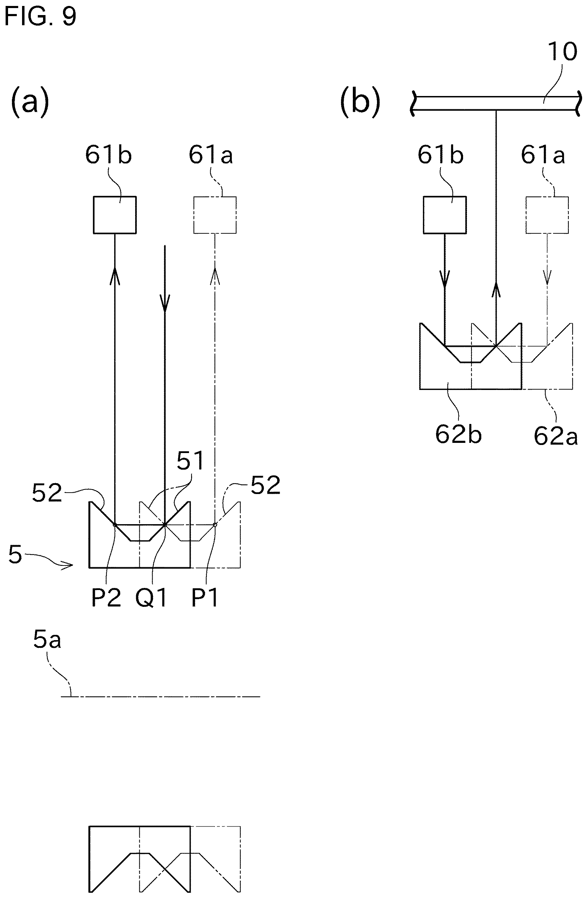

Next, the first light guide unit 61 and the second light guide unit 62 will be described in detail. FIG. 7 is a diagonal view showing the polygon mirror 5 and the second light guide unit 6. FIG. 8 is a schematic diagram showing that the laser beam is irradiated to different irradiation zones by switching the emission position from which the laser beam is emitted from the polygon mirror 5. FIG. 9 is a simplified diagram showing the light path of the laser beam reflected by the polygon mirror 5 and irradiated to the workpiece 10.

The first light guide unit 61 has a first reflection mirror 61a and a second reflection mirror 61b, as shown in FIGS. 7 and 8. The second light guide unit 62 has a first light guide member 62a and a second light guide member 62b. The first light reflection unit 71 is made of the first reflection mirror 61a and the first light guiding member 62a. The second light reflection unit 72 is made of the second reflection mirror 61b and the second light guide member 62b.

The first reflection mirror 61a and the second reflection mirror 61b are provided for each of the two emission positions of the emission light from the polygon mirror 5 in the direction of the rotational axis 5a. As shown in FIG. 7, the first reflection mirror 61a and the second reflection mirror 61b are provided at different positions from each other in the direction of the rotational axis 5a of the polygon mirror 5.

The first reflection mirror 61a is placed to reflect the light toward the first light guide member 62a over an angular range over which the emission light is deflected as shown by the bold arrows in FIG. 4(a).

The first light guide member 62a is placed in correspondence with the first reflection mirror 61a. The first light guide member 62a reflects the light guided from the first reflection mirror 61a while displacing it in the direction of the rotational axis 5a. Although the first light guide member 62a is depicted in simplified form in FIG. 7, the first light guide member 62a can be made of, for example, a V-shaped reflection mirror.

The light reflected by the first light guide member 62a is guided along a virtual plane disposed between the first reflection mirror 61a and the second reflection mirror 61b to irradiate a portion of the workpiece 10 corresponding to a virtual chord VC1. The irradiation zone corresponding to this virtual chord VC1 (first scanning area) corresponds to the deflection angular range of the emission light in FIG. 4(a).

The second reflection mirror 61b is placed to reflect the light toward the second light guide member 62b over the range over which the emission light is deflected as shown by the bold arrows in FIG. 4(b).

The second light guide member 62b is placed in correspondence with the second reflection mirror 61b. The second light guide member 62b reflects the light guided from the second reflection mirror 61b while displacing it in the direction of the rotational axis 5a. Although the second light guide member 62b is depicted in simplified form in FIG. 7, the second light guide member 62b can be made of, for example, a V-shaped reflection mirror.

The light reflected by the second light guide member 62b is guided along a virtual plane disposed between the first reflection mirror 61a and the second reflection mirror 61b to irradiate a portion of the workpiece 10 corresponding to a virtual chord VC2. The irradiation zone corresponding to this virtual chord VC2 (second scanning area) corresponds to the deflection angular range of the emission light in FIG. 4(b).

With the above configuration, when the polygon mirror 5 is rotated, the focal point of the laser beam alternately repeats scanning of the two irradiation zones. Specifically, when the light hits a certain side of the polygon mirror 5, the emission light from the polygon mirror 5 is reflected by the first light reflection unit 71, and the scanning of the irradiation zone corresponding to the virtual chord VC1 in FIG. 8(a) is performed. On the other hand, when the light hits the adjacent side, the emission light from the polygon mirror 5 is reflected by the second light reflection unit 72, and the scanning of the irradiation zone corresponding to the virtual chord VC2 in FIG. 8(b) is performed. In FIG. 8, the polygon mirror 5 is shown simply as a triangle focusing only on one side where the light is reflected. By the above, a straight scanning along a long scanning line L can be realized as a whole.

In the configuration of the present embodiment, the emission position of the emission light can be switched in the direction of the rotational axis 5a at a timing synchronized with a cycle in which the deflection angle of the emission light changes from one end of the predetermined angular range to the other end, simply by rotating the polygon mirror 5. Accordingly, the irradiation zone can be switched at a high speed by guiding the light emitted from different positions in the direction of the rotational axis 5a to different locations.

In the present embodiment, the switching of the irradiation zone is realized by utilizing the fact that the emission position of the emission light changes discontinuously in the direction of the rotational axis 5a. Accordingly, compared with the case where the irradiation zone is switched by dividing the deflection angular range of the emission light (dividing in the circumferential direction) and guiding each light to a different place, the deflection angular range of the emission light corresponding to one side of the polygon mirror 5 can be made smaller. That is, the number of sides of the polygon mirror 5 can be increased.

Considering a polygon mirror of polygonal shape, the distance between the point where light is reflected by the polygon mirror (reflection point) and the rotational axis of the polygon mirror is not constant when strictly considered. When considering the polygon mirror, the distance between the reflection point and the rotational axis becomes the shortest when the light hits the bisecting point of each side. The distance between the reflection point and the rotational axis increases as the point where the light hits approaches the end of the side from the bisecting point. Thus, the position of the reflection point fluctuates periodically according to the rotation of the polygon mirror 5.

This positional fluctuation of the reflection point leads to a fluctuation of the light path length. Thus, it causes distortion in scanning, especially when the light hits near the end of the side of the polygon (in other words, the vertex) of the polygon mirror.

In this respect, the polygon mirror 5 of the present embodiment can increase the number of sides as described above, so that each side can be shortened. As a result, the positional fluctuation of the reflection point which causes distortion in scanning can be made smaller. That is, distortion in a situation where the laser beam hits a portion close to the vertex (ridge line) of the polygon mirror 5 can be reduced.

Furthermore, in the polygon mirror 5 of the present embodiment, when the point where the light hits passes through the vertex of the polygon mirror 5, [1] the discontinuous movement of the deflection angle of the emission light from the end to the end of the predetermined angular range and [2] the switching of the irradiation zone by discontinuously changing of the emission position of the emission light in the direction of the rotational axis 5a are performed at the same time. Therefore, the timing at which the polygon mirror 5 cannot be irradiated with the laser beam can be substantially not increased.

The following is a concrete explanation. The laser beam is not infinitely thin, but has a certain degree of thickness. Therefore, when the laser beam hits the polygon mirror 5, the irradiation area of the laser beam has a certain amount of area.

Since the polygon mirror 5 rotates, a timing in which the vertex (ridge line) of the polygon mirror 5 is included in the irradiation area of the laser beam occurs repeatedly. At this timing, the intensity of the light emitted from the polygon mirror 5 and irradiated to the workpiece 10 is not stable, so that processing or other work cannot be performed well. Therefore, at this timing, the irradiation of the laser beam from the laser oscillator 21 is temporarily suspended so that the laser beam does not enter into the polygon mirror 5.

In the configuration of PTL 1, the deflection angular range of the emission light by one side of the polygon mirror is divided (in the circumferential direction), and each of the divided light is led to a different irradiation zone. In this configuration, not only at the timing when the vertex of the polygon mirror 5 is included in the irradiation area of the laser beam, but also at the timing when the emission light approaches the boundary where the deflection angular range is divided, the intensity of the light irradiated to the workpiece 10 is not stable, and thus it was necessary to shut off the laser beam in the same manner as described above.

In this respect, in the present embodiment, when the vertex of the polygon mirror 5 passes through the irradiation area of the laser beam, the switching of the irradiation zone is performed simultaneously. Therefore, the effect of reducing the distortion of scanning can be achieved without substantially increasing the timing at which the laser beam must be shut off (at the same irradiation rate as in PTL 1).

The diameter of the laser beam irradiated to the polygon mirror 5 may be, for example, a few millimeters. However, if it is needed to squeeze the laser beam, for example, to the order of 1/100th of a millimeter at the focal point, the diameter at the time of irradiation to the polygon mirror 5 may have to be 20 to 30 millimeters. When the diameter of the laser beam is large like this, if the side of the polygon mirror 5 is not long, the ratio of the time when the laser beam must be blocked will increase. On the other hand, making the side of the polygon mirror 5 longer causes the polygon mirror 5 to become larger. In this sense, the configuration of the present embodiment, which does not increase the timing at which the laser beam must be shut off, is advantageous in that it enables both effective utilization of the laser beam and downsizing of the polygon mirror 5.

In FIG. 9(a), in the configuration of FIGS. 7 and 8, the light path of the laser beam reflected by the polygon mirror 5 and reaches the first reflection mirror 61a or the second reflection mirror 61b is shown schematically. In FIG. 9(b), the light path of the laser beam reflected by the first reflection mirror 61a or the second reflection mirror 61b, reflected by the first light guide member 62a or the second light guide member 62b, and reaches the workpiece 10 is shown schematically.

As shown in FIG. 9(a), the emission positions P1 and P2 of the laser beam from the polygon mirror 5 are switched in the direction of the rotational axis 5a so as to be symmetrical with respect to the incident position Q 1 of the laser beam to the polygon mirror 5. In other words, considering the distance in the direction of the rotational axis 5a, the distance from one emission position P1 to the incident position Q1 and the distance from the other emission position P2 to the incident position Q1 is equal. Accordingly, by symmetrically configuring the first light guide unit 61 and the second light guide unit 62, it is easy to make the light path length to reach the workpiece 10 generally unchanged even if the emission positions P1, P2 of the laser beam are switched in the direction of the rotational axis 5a. Therefore, scanning with less distortion can be realized with a simple configuration.

As described above, the polygon mirror 5 of the present embodiment rotates around the rotational axis 5a. A first reflection surface 51 and a second reflection surface 52 are respectively placed on two or more of a plurality of sides of the polygon mirror 5. The first reflection surface 51 is formed in a planar shape inclined with respect to the virtual plane perpendicular to the rotational axis 5a. The second reflection surface 52 is formed in a planar shape inclined with respect to the virtual plane perpendicular to the rotational axis 5a. Light which entered into the polygon mirror 5 is reflected by the first reflection surface 51 and then by the second reflection surface 52. Among the plurality of the sides, the direction in which the first reflection surface 51 is inclined with respect to the virtual plane perpendicular to the rotational axis 5a is different.

As a result, the position at which the light is emitted from the polygon mirror 5 (emission position) is discontinuously switched in the direction of the rotational axis 5a as the polygon mirror 5 rotates. Therefore, by guiding the emission light to different scanning areas according to the emission position in the direction of the rotational axis 5a, scanning of a plurality of areas can be performed while switching the scanning areas at a high speed. Conversely, a configuration in which a large number of areas are scanned can be easily realized by increasing the number of sides of the polygon mirror 5. Therefore, since the sides of the polygon mirror 5 can be shortened, the distortion of scanning at both ends of each scanning area can be reduced.

In the polygon mirror 5 of the present embodiment, the plurality of the sides includes two sides where the direction in which the first reflection surface 51 is inclined with respect to the virtual plane perpendicular to the rotational axis 5a is opposite. Between one of the two sides and the other, the distance in the direction of the rotational axis 5a between the first reflection surface 51 and the second reflection surface 52 is equal.

As a result, even if the emission position from the polygon mirror 5 is switched in the direction of the rotational axis 5a, the fluctuation of the light path length can be reduced by making the configuration of guiding the light after the emitting to the respective scanning area symmetrical. Therefore, high quality scanning can be realized.

The light guide device 22 of the present embodiment includes the polygon mirror 5, the first light reflection unit 71, and the second light reflection unit 72. The first light reflection unit 71 guides the light deflected by one of the plurality of the sides of the polygon mirror 5 to the scanning area corresponding to the virtual chord VC1, as shown in FIG. 8(a). The second light reflection unit 72 guides the light deflected by the other side of the polygon mirror 5 to the scanning area corresponding to the virtual chord VC2, as shown in FIG. 8(b).

This allows for flexible scanning of various locations by guiding the light to a plurality of scanning areas. Since the scanning distortion in each scanning area is reduced, high quality scanning can be performed as a whole.

The laser processing device 100 of this embodiment includes a light guide device 22. Each of the first light reflection unit 71 and the second light reflection unit 72 is provided with a plurality of reflection surfaces that reflect the light. The first light reflection unit 71 and the second light reflection unit 72 reflect the light emitted from the rotating polygon mirror 5a plurality of times and guide the light to an arbitrary irradiated point included in the scanning line L that is straight. The light path length from an incident position of the light to the polygon mirror 5 to the irradiated point is substantially constant over all the irradiated points in the scanning line L. On the scanning line L, the scanning speed of the light guided from the polygon mirror 5 by the first light reflection unit 71 and the second light reflection unit 72 is substantially constant.

As a result, by scanning while switching between a plurality of scanning areas, a long-distance straight scanning can be realized as a whole. By the way, when the rotation phase of the polygon mirror is a rotation phase in which the irradiation range of the incident light hangs on the portion corresponding to the vertex of the polygon, the light intensity of the reflection light is not stable and cannot be used for optical scanning in effect. In addition, in the case of the configuration in which the deflection angular range of the emission light corresponding to one side of the polygon mirror is divided and led to different irradiation zones, when the rotation phase of the angle of the emission light falls on the boundary of the division, it cannot be used for optical scanning in the same way. In this respect, in the configuration of the present embodiment, the rotation phase of the polygon mirror 5 in which the incident light is irradiated to the vertex of the polygon and the rotation phase of the polygon mirror 5 corresponding to the switching of the irradiation zone can be made common. Therefore, since the range of the rotation phase of the polygon mirror 5 that cannot be used for optical scanning is less likely to increase, scanning with less distortion can be realized while using the light efficiently for scanning.

Next, a plurality of modifications of the above polygon mirror 5 will be described. In the description of this variation and after, members identical or similar to those of the above-described embodiment are given the same reference numerals on the drawing, and descriptions thereof may be omitted.

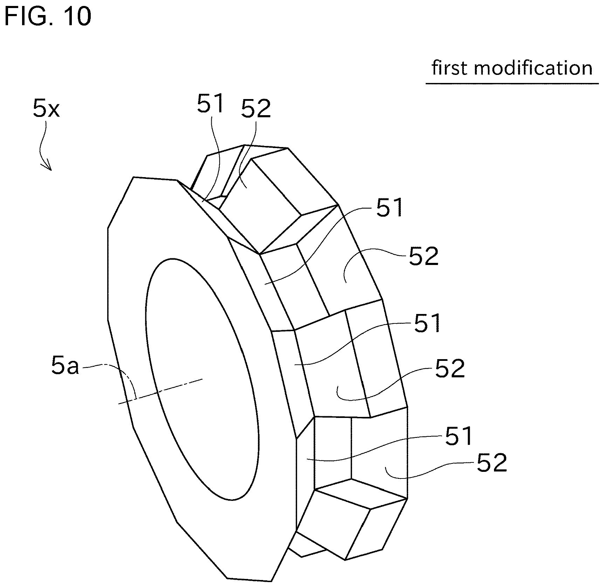

A polygon mirror 5x of the first modification shown in FIG. 10, which is not in accordance with the claimed invention, is configured to be a regular dodecagon when viewed in the direction of the rotational axis 5a. The first reflection surface 51 and the second reflection surface 52 are arranged on each side. In the polygon mirror 5x of this modification, the direction in which the first reflection surface 51 is inclined with respect to the virtual plane perpendicular to the rotational axis 5a is the same on all sides. The direction in which the second reflection surface 52 is inclined with respect to the virtual plane perpendicular to the rotational axis 5a is also the same on all sides. In any two adjacent sides in the circumferential direction, the positions of the second reflection surfaces 52 are different from each other in the direction of the rotational axis 5a. Accordingly, the distance in the direction of the rotational axis 5a between the first reflection surface 51 and the second reflection surface 52 is different between the two adjacent sides.

In this modification, the laser beam which entered into the polygon mirror 5x is first reflected by the first reflection surface 51 and then reflected by the second reflection surface 52, and is emitted from the polygon mirror 5x. The emission position at which the laser beam is emitted from the polygon mirror 5x is switched in two steps in the direction of the rotational axis 5a according to which side of the polygon mirror 5x the laser beam hits.

The polygon mirror 5x of this modification differs from the polygon mirror 5 of FIG. 3 in that the relationship between the two emission positions and the incident position is asymmetrical. Therefore, in the polygon mirror 5x of this modification, the light path length from the incident to the emission of the polygon mirror 5x changes somewhat according to the switching of the emission position. However, this difference in the light path length can be canceled by adjusting the position of the reflection mirror or the like of the second light guide unit 6 accordingly.

As described above, in the polygon mirror 5x of this modification, the plurality of the sides of the polygon mirror 5x includes two sides where the direction in which the first reflection surface 51 is inclined with respect to the virtual plane perpendicular to the rotational axis 5a is the same. Between one of the two sides adjacent to each other in the circumferential direction and the other, the distance between the first reflection surface 51 and the second reflection surface 52 is different.

As a result, the switching of the position from which the laser beam is emitted from the polygon mirror 5x can be realized with a simple configuration.

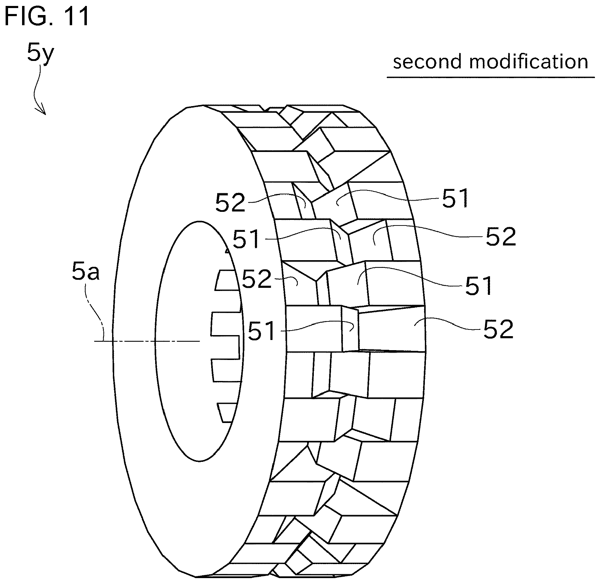

The polygon mirror 5y of the second modification shown in FIG. 11 is configured to be a regular 32 square when viewed in the direction of the rotational axis 5a. In the polygon mirror 5y of this modification, the emission position of the laser beam can be switched in four steps in the direction of the rotational axis 5a. This polygon mirror 5y is configured by combining the switching of the direction of the inclination of the first reflection surface 51 in the polygon mirror 5 of FIG. 3 and the switching of the distance between the first reflection surface 51 and the second reflection surface 52 in the polygon mirror 5x of FIG. 10. With the rotation of the polygon mirror 5y, the emission position of the laser beam is cyclically switched among the four positions.

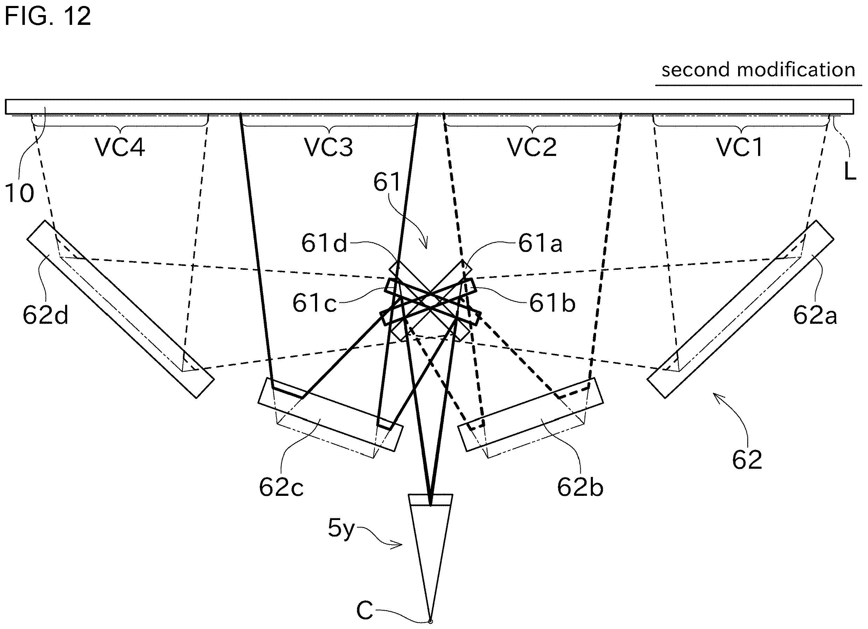

When using this polygon mirror 5y, the second light guide unit 6 can be configured to guide the emission light deflected at the four emission positions to the corresponding four irradiation zones, as shown in FIG. 12. For the sake of this, the first light guide unit 61 includes a first reflection mirror 61a, a second reflection mirror 61b, a third reflection mirror 61c, and a fourth reflection mirror 61d. The second light guide unit 62 includes a first light guide member 62a, a second light guide member 62b, a third light guide member 62c, and a fourth light guide member 62d.

Next, a modification regarding the second light guide unit 6 will be described.

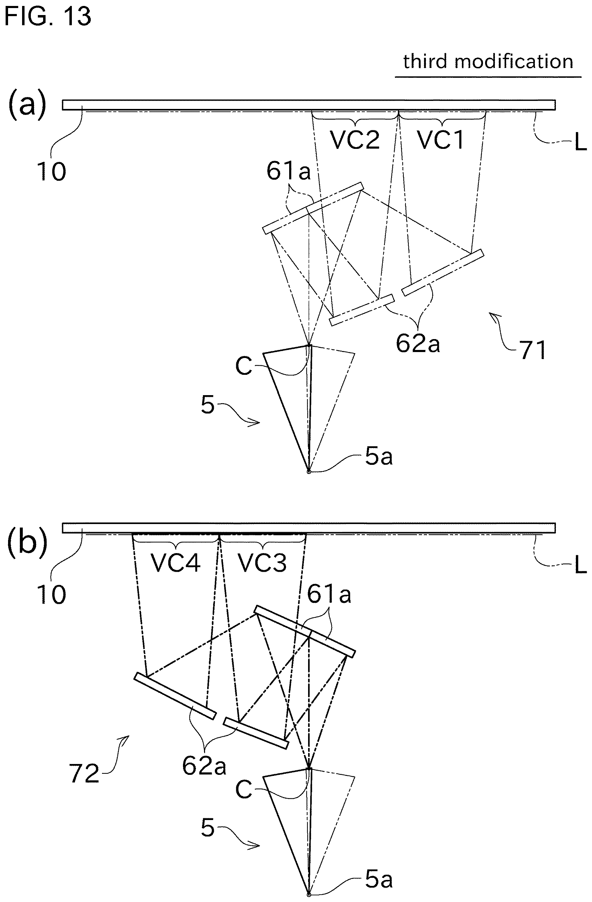

It is possible to divide each of the deflection angular ranges corresponding to one side of the polygon mirror 5 (in other words, each of the virtual arcs DA1, DA2) in the circumferential direction, and to configure the second light guide unit 6 so that the arcs after the division are aligned on the scanning line L. A configuration of this modification is shown in FIG. 13.

In the modification of FIG. 13, the deflection angular range of the emission light is divided into two for each of the two emission positions in the direction of the rotational axis 5a. This division can be realized by arranging a reflection mirror or the like so as to correspond to only a part of the deflection range of the laser beam. As a result, the laser beam is guided to a total of four irradiation zones (irradiation zones corresponding to virtual chords VC1 to VC4).

By dividing and shortening the virtual arcs, each arc becomes an even better approximation to a straight line. Thus, scanning distortion can be reduced.

Although the preferred embodiment and the modifications of the present invention have been described above, the configurations described above may be modified as follows, for example.

The number of sides of the polygons of the polygon mirrors 5, 5x, and 5y can be changed arbitrarily.

The emission position of the light from the polygon mirrors 5, 5x, 5y can be changed to switch between not two or four steps, but for example three steps, eight steps, etc.

The first reflection surface 51 and the second reflection surface 52 can also be realized using a prism. Similarly, the second light guide member 62b can be realized using a prism.

The workpiece conveyance device 1 may be omitted. That is, laser processing may be performed while adjusting the position of the laser unit 2 with respect to the workpiece 10 which is fixed.

The optical scanning by the polygon mirrors 5, 5x, 5y may be used for applications other than laser processing.

### DESCRIPTION OF THE REFERENCE NUMERALS

5, 5x, 5y polygon mirror
5a rotational axis
6 second light guide unit
22 light guide device
51 first reflection surface
52 second reflection surface
71 first light reflection unit
72 second light reflection unit
100 laser processing device (optical scanning device)

## Claims

1. A polygon mirror (5, 5y) configured to rotate around a rotational axis (5a), comprising a plurality of sides, wherein
each of two or more sides of the plurality of sides includes:
a first reflection surface (51) formed in a plane inclined to a plane perpendicular to the rotational axis (5a); and
a second reflection surface (52) formed in a plane inclined to a plane perpendicular to the rotational axis (5a),
after light which entered into the polygon mirror (5, 5y) in a direction perpendicular to the rotational axis (5a) and toward the center of the polygon mirror (5) is reflected by the first reflection surface (51), the light is reflected by the second reflection surface (52), and
at least one of a direction in which the first reflection surface (51) is inclined with respect to a plane perpendicular to the rotational axis (5a) and a distance in the direction of the rotational axis (5a) between the first reflection surface (51) and the second reflection surface (52) is different among the plurality of the sides,
**characterized in that**
the two or more sides include two adjacent sides where the direction in which the first reflection surface (51) is inclined with respect to a plane perpendicular to the rotational axis (5a) is opposite, and
between one of the two adjacent sides and the other, the distance in the direction of the rotational axis (5a) between the first reflection surface (51) and the second reflection surface (52) is equal.

2. The polygon mirror (5, 5y) according to claim 1, wherein
the two or more sides include two sides where the direction in which the first reflection surface (51) is inclined with respect to a plane perpendicular to the rotational axis (5a) is the same, and
between one of the two sides and the other, the distance between the first reflection surface (51) and the second reflection surface (52) is different.

3. A light guide device (22) comprises:
the polygon mirror (5, 5y) according to claim 1 or claim 2:
a first light reflection unit (71) guiding light deflected by one of the plurality of the sides of the polygon mirror (5, 5y) to a first scanning area; and
a second light reflection unit (72) guiding light deflected by the other side to a second scanning area different from the first scanning area.

4. An optical scanning device (100) comprising the light guide device (22) according to claim 3, wherein
each of the first light reflection unit (71) and the second light reflection unit (72) includes a plurality of reflection surfaces that reflect the light,
each of the first light reflection unit (71) and the second light reflection unit (72) reflects the light emitted from the rotating polygon mirror (5, 5y) two or more times, and guides the light to an arbitrary irradiated point included in a scanning line that is straight,
a light path length from an incident position of the light to the polygon mirror (5, 5y) to the irradiated point is substantially constant over all the irradiated points in the scanning line, and
on the scanning line, the scanning speed of the light guided from the polygon mirror (5, 5y) by the first light reflection unit (71) and the second light reflection unit (72) is substantially constant.

## Patentansprüche

1. Ein Polygonspiegel (5, 5y), der sich um eine Drehachse (5a) dreht, umfassend eine Vielzahl von Seiten, wobei
jede der zwei oder mehr Seiten der Vielzahl von Seiten umfasst:
eine erste Reflexionsfläche (51), die in einer Ebene ausgebildet ist, die zu einer Ebene senkrecht zu der Drehachse (5a) geneigt ist; und
eine zweite Reflexionsfläche (52), die in einer Ebene ausgebildet ist, die zu einer Ebene senkrecht zu der Drehachse (5a) geneigt ist,
nachdem Licht, das in den Polygonspiegel (5, 5y) in einer Richtung senkrecht zur Rotationsachse (5a) und in Richtung des Zentrums des Polygonspiegels (5) eingetreten ist,
von der ersten Reflexionsfläche (51) reflektiert wird, das Licht von der zweiten Reflexionsfläche (52) reflektiert wird, und
eine Richtung, in der die erste Reflexionsfläche (51) in Bezug auf eine Ebene senkrecht zur Drehachse (5a) geneigt ist, und/oder ein Abstand in Richtung der Drehachse (5a) zwischen der ersten Reflexionsfläche (51) und der zweiten Reflexionsfläche (52) unter der Vielzahl der Seiten unterschiedlich ist,
**dadurch gekennzeichnet, dass**
die zwei oder mehr Seiten zwei benachbarte Seiten umfassen, bei denen die Richtung, in der die erste Reflexionsfläche (51) in Bezug auf eine Ebene senkrecht zur Rotationsachse (5a) geneigt ist, entgegengesetzt ist, und
zwischen einer der zwei benachbarten Seiten und der anderen, der Abstand in Richtung der Richtung der Drehachse (5a) zwischen der ersten Reflexionsfläche (51) und der zweiten Reflexionsfläche Oberfläche (52) gleich ist.

2. Der Polygonspiegel (5, 5y) nach Anspruch 1, wobei
die zwei oder mehr Seiten zwei Seiten umfassen, bei denen die Richtung, in der die erste Reflexionsfläche (51) in Bezug auf eine Ebene senkrecht zur Drehachse (5a) geneigt ist, die gleiche ist, und zwischen einer der zwei Seiten und der anderen der Abstand zwischen der ersten Reflexionsfläche (51) und der zweiten Reflexionsfläche (52) unterschiedlich ist.

3. Eine Lichtleitvorrichtung (22), umfassend:
den Polygonspiegel (5, 5y) nach Anspruch 1 oder Anspruch 2;
eine erste Lichtreflexionseinheit (71), die von einer der mehreren Seiten des Polygonspiegels (5, 5y) abgelenktes Licht zu einem ersten Abtastbereich leitet; und
eine zweite Lichtreflexionseinheit (72), die von der anderen Seite abgelenktes Licht zu einem zweiten Abtastbereich leitet, der sich von dem ersten Abtastbereich unterscheidet.

4. Optische Abtastvorrichtung (100) umfassend die Lichtleitvorrichtung (22) nach Anspruch 3, wobei
jede der ersten Lichtreflexionseinheit (71) und der zweiten Lichtreflexionseinheit (72) eine Vielzahl von Reflexionsflächen aufweist, die das Licht reflektieren,
jede der ersten Lichtreflexionseinheit (71) und der zweiten Lichtreflexionseinheit (72) das von dem rotierenden Polygonspiegel (5, 5y) emittierte Licht zwei- oder mehrmalig reflektiert und das Licht zu einem beliebigen bestrahlten Punkt leitet, der in einer geraden Abtastlinie enthalten ist,
eine Lichtweglänge von einer Einfallsposition des Lichts auf den Polygonspiegel (5, 5y) zu dem bestrahlten Punkt über alle bestrahlten Punkte in der Abtastlinie im Wesentlichen konstant ist und
auf der Abtastlinie die Abtastgeschwindigkeit des vom Polygonspiegel (5, 5y) durch die erste Lichtreflexionseinheit (71) und die zweite Lichtreflexionseinheit (72) geführten Lichts im Wesentlichen konstant ist.

## Revendications

1. Un miroir polygonal (5, 5y) qui tourne autour d'un axe de rotation (5a), comprenant une pluralité de côtés, dans laquelle
chacun des deux côtés ou plus de la pluralité de côtés comprend :
une première surface de réflexion (51) formée dans un plan incliné par rapport à un plan perpendiculaire à l'axe de rotation (5a); et
une deuxième surface de réflexion (52) formée dans un plan incliné par rapport à un plan perpendiculaire à l'axe de rotation (5a),
après que la lumière qui est entrée dans le miroir polygonal (5, 5y) dans une direction perpendiculaire à l'axe de rotation (5a) et vers le centre du miroir polygonal (5) a été réfléchie par la première surface de réflexion (51), la lumière est réfléchie par la deuxième surface de réflexion (52), et
au moins une parmi une direction dans laquelle la première surface de réflexion (51) est inclinée par rapport à un plan perpendiculaire à l'axe de rotation (5a) et une distance dans la direction de l'axe de rotation (5a) entre la première surface de réflexion (51) et la deuxième surface de réflexion (52) est différente parmi la pluralité de faces,
**caractérisé en ce que**
les deux côtés ou plus comprennent deux côtés adjacents où la direction dans laquelle la première surface de réflexion (51) est inclinée par rapport à un plan perpendiculaire à l'axe de rotation (5a) est opposée, et
entre l'un des deux côtés adjacents et l'autre, la distance dans la direction de l'axe de rotation (5a) entre la première surface de réflexion (51) et la deuxième surface de réflexion (52) est égale.

2. Le miroir polygonal (5, 5y) selon la revendication 1, dans lequel
les deux côtés ou plus comprennent deux côtés où la direction dans laquelle la première surface de réflexion (51) est inclinée par rapport à un plan perpendiculaire à l'axe de rotation (5a) est la même, et
entre l'un des deux côtés et l'autre, la distance entre la première surface de réflexion (51) et la deuxième surface de réflexion (52) est différente.

3. Un dispositif de guidage de la lumière (22) comprend :
le miroir polygonal (5, 5y) selon la revendication 1 ou la revendication 2 ;
une première unité de réflexion de la lumière (71) guidant la lumière déviée par l'un des côtés du miroir polygonal (5, 5y) vers une première zone de balayage ; et
une deuxième unité de réflexion de la lumière (72) guidant la lumière déviée par l'autre côté vers une deuxième zone de balayage différente de la première zone de balayage.

4. Dispositif de balayage optique (100) comprenant le dispositif de guidage de la lumière (22) selon la revendication 3, dans lequel
chacune de la première unité de réflexion de la lumière (71) et la deuxième unité de réflexion de la lumière (72) comprend une pluralité de surfaces de réflexion qui réfléchissent la lumière,
chacune de la première unité de réflexion de la lumière (71) et de la deuxième unité de réflexion de la lumière (72) réfléchit la lumière émise par le miroir polygonal rotatif (5, 5y) deux fois ou plus, et guide la lumière vers un point irradié arbitraire inclus dans une ligne de balayage droite,
un longueur du trajet de la lumière entre la position d'incidence de la lumière sur le miroir polygonal (5, 5y) et le point irradié est sensiblement constante pour tous les points irradiés de la ligne de balayage, et
sur la ligne de balayage, la vitesse de balayage de la lumière guidée depuis le miroir polygonal (5, 5y) par la première unité de réflexion de la lumière (71) et la deuxième unité de réflexion de la lumière (72) est sensiblement constante.
